# EUROPÄISCHE PATENTSCHRIFT

(11) **EP 1 123 224 B1**
(45) Veröffentlichungstag und Bekanntmachung des Hinweises auf die Patenterteilung: **29.10.2003**
(21) Anmeldenummer: 00960509.8
(22) Anmeldetag: 23.08.2000
(51) Int. Cl.: B60R 5/04

(54) **LADERAUMABDECKUNG FÜR EIN KRAFTFAHRZEUG**
LUGGAGE COMPARTMENT COVER FOR A VEHICLE
RECOUVREMENT DESTINE A L'ESPACE DE CHARGEMENT D'UN VEHICULE AUTOMOBILE

(30) Priorität: 27.08.1999 DE 19940602
(43) Veröffentlichungstag der Anmeldung: 16.08.2001
(73) Patentinhaber: BOS GmbH & Co. KG, 73773 Aichwald/Aichschiess (DE)
(72) Erfinder: EHRENBERGER, Marina, 73730 Esslingen (DE); SCHLECHT, Werner, P., 71665 Vaihingen/Enz-aurich (DE); SEEL, Holger, 71134 Aidlingen (DE)
(74) Vertreter: Patentanwälte Ruff, Wilhelm, Beier, Dauster & Partner
(86) Internationale Anmeldenummer: EP0008215
(87) Internationale Veröffentlichungsnummer: WO01015938

(56) Entgegenhaltungen:
- DE-A- 4 010 209
- DE-A- 4 040 038
- DE-A- 4 336 380
- DE-C- 3 938 776
- DE-C- 19 709 537
- DE-C- 19 728 587
- FR-A- 2 694 732
- US-A- 5 772 370

## Beschreibung

Die Erfindung betrifft eine Laderaumabdeckung für ein Kraft-fahrzeug gemäß den Oberbegriff des Anspruchs 1.

Eine solche Laderaumabdeckung ist insbesondere für Kombi-Personenkraftwagen allgemein bekannt. In einem fahrzeugfest im Bereich einer Rückenlehne einer Fondsitzbank gehaltenen Kassettengehäuse ist eine Rollowelle drehbar gelagert, auf der ein flexibles Flächengebilde in Form einer Abdeckplane aufund abwickelbar gehalten ist. Die Abdeckplane tritt mit ihrem rückseitigen Stirnbereich aus dem Kassettengehäuse aus. An diesem Stirnbereich ist ein formsteifes Konturteil angeordnet, von dem aus auf gleicher Höhe zu gegenüberliegenden Seiten hin zwei Haltezapfen jeweils seitlich nach außen abragen, die im ausgezogenen Zustand der Abdeckplane in fahrzeugfeste Aufnahmen im Bereich einer D-Säule der Kraftfahrzeugkarosserie einhängbar sind. In dem eingehängten Funktionszustand ist die Abdeckplane horizontal etwa auf Höhe einer Bordkante de Kraftfahrzeugkarosserie über den Laderaum gespannt.

Aufgabe der Erfindung ist es, eine Laderaumabdeckung der ein gangs genannten Art zu schaffen, die bei einem Fahrzeugauf prall eine gute Sicherung von unterhalb der Abdeckplane im Laderaum befindlichem Ladegut ermöglicht.

Diese Aufgabe wird durch die Merkmale des Anspruchs 1 gelöst. Die erfindungsgemäße Lösung geht von der Erkenntnis aus, daß bekannte Laderaumabdeckungen im Crashfall keine ausreichende Sicherung des Ladegutes gewährleisten. Bei einem entsprechenden Fahrzeugaufprall wird das auf dem Laderaumboden befindliche Ladegut nach oben geschleudert, wodurch auch die flexible Abdeckplane ein-schließlich eines etwaigen Konturteiles nach oben gewölbt wird. Dadurch gleiten die Haltezapfen aus den fahrzeugfesten Aufnahmen heraus und die Abdeckplane wird freigegeben. Durch die erfindungsgemäße Lösung wird ein Lösen der Halteelemente aus den fahrzeugfesten Aufnahmen zuverlässig verhindert. Da die Halteelemente zudem über ein längserstrecktes Zugmittel, vorzugsweise ein formstabiles Hohlprofil, miteinander verbunden sind, wird ein Lösen der Halteelemente aus den Aufnahmen vermieden. Dadurch ergibt sich auch bei einem Fahrzeugaufprall ein sicherer Rückhalt von Ladegut unterhalb der Abdeckplane im ausgezogenen Funktionszustand des Flächengebildes.

Bei vertikal aufspannbaren Trennetzen zum Abtrennen eines Laderaumes von einem Fahrgastraum eines Kombi-Personenkraftwagens ist es bereits bekannt (DE 43 36 380 C2), eine Auszugstange an einem vorderen Stirnende des Trennetzes vorzusehen, die auf gegenüberliegenden Seiten mit Halteelementen versehen ist, die in fahrzeugfeste Aufnahmen einhängbar sind. Die Halteelemente weisen pilzförmige Köpfe auf, die eine formschlüssige Sicherung in den fahrzeugfesten Aufnahmen gewährleisten. Der Erfindung lagen Überlegungen zugrunde, die die Anwendbarkeit einer solchen Lösung auf die der Erfindung zugrundeliegende Problematik prüften. Anhand dieser Überlegungen und unter Berücksichtigung der unterschiedlichen Anwendungen wie auch Anordnungen des Trennetzes einerseits und einer Laderaumabdeckung andererseits wurde die Erkenntnis erzielt, daß eine solche bekannte Lösung auch auf die erfindungsgemäße Lösung übertragbar ist.

In Ausgestaltung der Erfindung sind die Halteelemente mittels jeweils einer energieabsorbierenden Deformationsanordnung mit dem Zugmittel verbunden. Dadurch ist es möglich, Lastspitzen durch umhergeschleudertes Ladegut im Fall eines Fahrzeugaufpralls, die auf die Laderaumabdeckung wirken, zu vermeiden. Zudem wird Energie des nach oben geschleuderten Ladegutes durch die Laderaumabdeckung aufgenommen und im Bereich der Halteelemente und des Zugmittels durch die Deformationsanordnungen in Verformungsenergie umgewandelt.

In weiterer Ausgestaltung der Erfindung ist das Zugmittel als über die gesamte Breite der Abdeckplane durchgängiges Hohlprofil gestaltet, in dem die energieabsorbierenden Deformationsanordnungen integriert sind. Dadurch wird eine platzsparende Unterbringung der Deformationsanordnungen erzielt. Das durchgängige Hohlprofil ist vorzugsweise aus Metall, insbesondere Stahl oder Aluminium, hergestellt.

In weiterer Ausgestaltung der Erfindung sind die Sicherungsabschnitte der Halteelemente als pilzartige Köpfe gestaltet, die mittels jeweils eines Schaftes mit der energieabsorbierenden Deformationsanordnung und dem Hohlprofil verbunden sind. In weiterer Ausgestaltung sind die Sicherungsabschnitte der fahrzeugfesten Aufnahmen jeweils als Einlauframpe mit einem in Montagerichtung anschließenden, in Zugrichtung wirksamen Hinterschnitt, der auf dem pilzartigen Kopf jedes Halteelementes abgestimmt ist, gestaltet. Dadurch wird eine äußerst einfache und zuverlässige Sicherung der Abdeckplane in seinem ausgezogenen Funktionszustand erzielt.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in perspektivischer Explosionsdarstellung eine Ausführungsform einer erfindungsgemäßen Laderaumabdeckung,
- Fig. 2: in vergrößerter, teilweise aufgebrochener, perspektivischer Darstellung einen Teil eines Halteprofiles eines vorderen Stirnbereiches des Flächengebildes nach Fig. 1 im Bereich der Verbindung eines Halteelementes mit einer Deformationsanordnung,
- Fig. 3: einen Querschnitt durch das Halteelement nach Fig. 2 entlang der Schnittlinie III-III in Fig. 4,
- Fig. 4: einen Längsschnitt durch das mit dem Halteelement versehene Halteprofil nach Fig. 2,

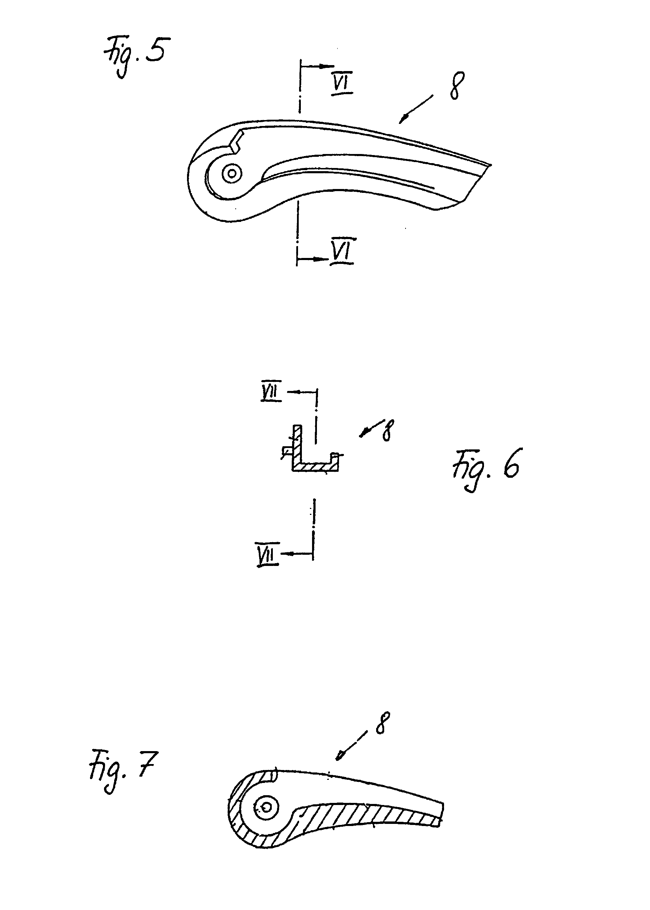

- Fig. 5: in vergrößerter, perspektivischer Darstellung eine fahrzeugfeste Aufnahme für ein korrespondierendes Halteelement des Flächengebildes nach Fig. 1,
- Fig. 6: einen Schnitt durch die fahrzeugfeste Aufnahme nach Fig. 5 entlang der Schnittlinie VI-VI in Fig. 5, und
- Fig. 7: einen Längsschnitt durch die fahrzeugfeste Aufnahme nach den Fig. 5 und 6 entlang der Schnittlinie VII-VII in Fig. 6.

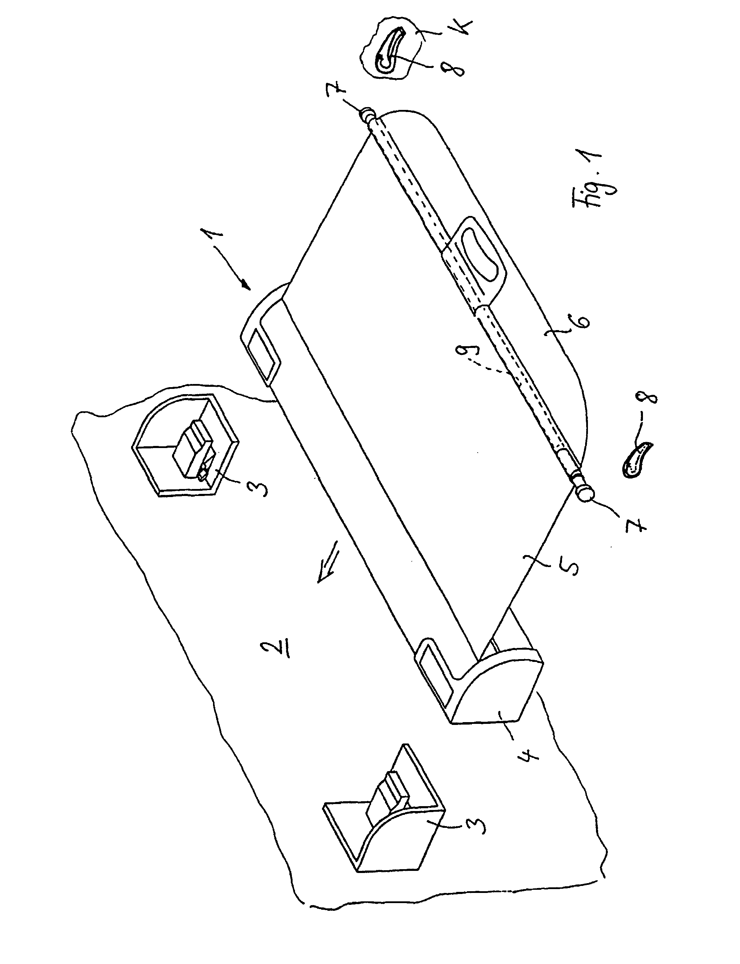

Eine Laderaumabdeckung 1 nach Fig. 1 ist an einer Rückwand 2 einer Rückenlehne einer Fondsitzanordnung in fahrzeugfesten Halterungen 3 lösbar festlegbar. Dazu weist die Laderaumabdeckung 1 ein Kassettengehäuse 4 auf, das mittels entsprechender Aussparungen mit den fahrzeugfesten Halterungen 3 durch ein Aufschieben in Pfeilrichtung verrastbar ist. In dem Kassettengehäuse 4 ist in grundsätzlich bekannter Weise ein flexibles Flächengebilde in Form einer Abdeckplane 5 auf einer Rollowelle auf- und abwickelbar gelagert. Die Abdeckplane 5 ragt mit einem vorderen Stirnbereich 6, 7, 9 aus einem rückseitigen Schlitz des Kassettengehäuses 4 heraus und ist - beim dargestellten Ausführungsbeispiel in Fahrtrichtung nach hinten - aus dem Kassettengehäuse 4 herausziehbar und in fahrzeugfesten Aufnahmen 8, die im Bereich von D-Säulen der Fahrzeugkarosserie H positioniert sind, lösbar festlegbar. In diesem ausgezogenen Funktionszustand überspannt die Abdeckplane 5 einen Laderaum.

Im Stirnbereich der Abdeckplane 5 ist ein zumindest weitgehend formsteifes Konturteil 6 vorgesehen, das sich über die gesamte Breite der Abdeckplane 5 erstreckt. Das Konturteil 6 schließt ein sich ebenfalls über die gesamte Breite der Abdeckplane 5 erstreckendes Hohlprofil 9 ein, das in einer entsprechenden Tasche zwischen Abdeckplane 5 und Konturteil 6 integriert ist. Auch das Konturteil 6 ist mit dem Material der Abdeckplane 5 überzogen, so daß die Abdeckplane 5, das Hohlprofil 9 und das Konturteil 6 zu einem einstückigen Bauteil miteinander verbunden sind.

Koaxial zu dem sich quer zur Auszugrichtung der Abdeckplane 5 erstreckenden Hohlprofil 9 sind im Bereich seiner gegenüberliegenden Stirnenden zwei Halteelemente 7 vorgesehen, die in die fahrzeugfesten Aufnahmen 8 einhängbar sind. Dazu weist jedes Halteelement 7 einen pilzförmigen Kopf auf, der von hin ten her in Fahrtrichtung nach vorne über eine entsprechende Einlauframpe in einen taschenartigen Endbereich der jeweiligen fahrzeugfesten Aufnahme 8 einschiebbar ist. Der taschenförmige Endbereich bildet einen Hinterschnitt für den jeweiligen pilzförmigen Kopf des Halteelementes 7, indem ein entsprechender, kreisbogenförmig verlaufender Steg den jeweiligen pilzförmigen Kopf 7 im taschenförmigen Endbereich übergreift. Im Bereich der Einlauframpe ist die fahrzeugfeste Aufnahme 8 nach oben offen, so daß ein großflächiger Bereich für das Aufsetzen des jeweiligen pilzförmigen Kopfes 7 besteht.

Jede fahrzeugfeste Aufnahme 8 ist an einer Verkleidung der D-Säule der Fahrzeugkarosserie K festgelegt.

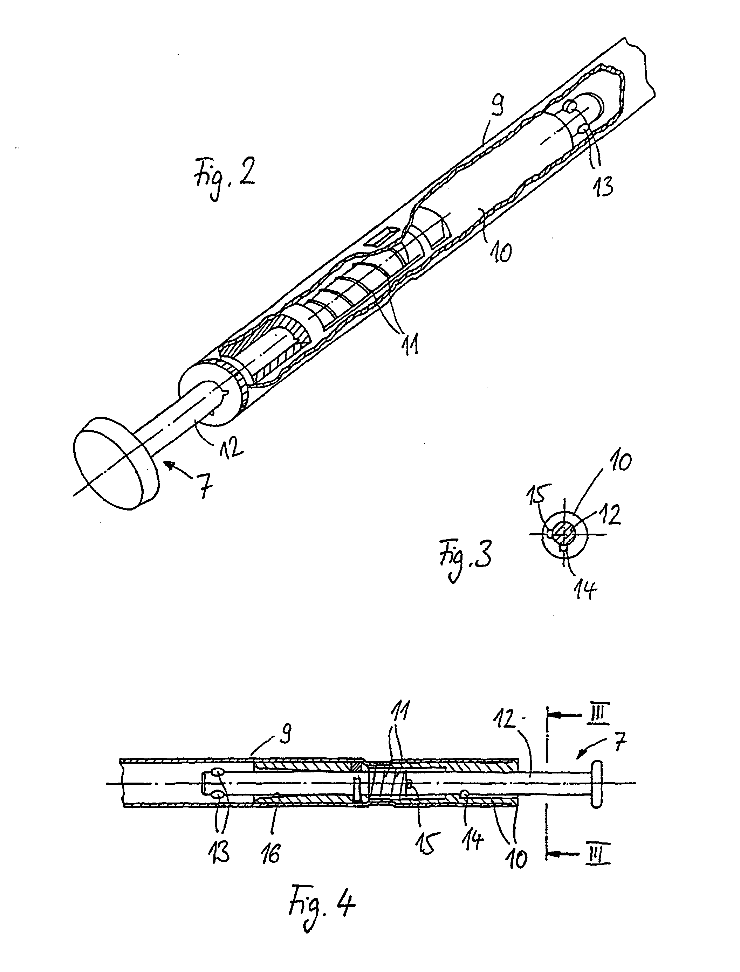

Wie anhand der Fig. 2 bis 4 erkennbar ist, ist der pilzförmige Kopf jedes Halteelementes 7 an einem zylindrischen Schaft 12 stirnseitig positioniert, der in das Hohlprofil 9 hineinragt. Der Schaft 12 ist in einem hohlzylindrischen Einsatzteil 10 längsverschiebbar gelagert, wobei das hohlzylindrische Einsatzteil 10 stirnseitig in das Hohlprofil 9 eingesteckt und durch entsprechende Sicken formschlüssig mit diesen verprägt und damit gesichert ist. Stirnseitig weist das Einsatzteil 10 eine Ringschulter auf, die sich an der umlaufenden Stirnkante des Hohlprofiles 9 abstützt. Der Schaft 12 ist mit einem eingeprägten Führungssteg 14 versehen, der in einer Längsnut des Einsatzteiles 10 geführt ist und eine Verdrehsicherung für den Schaft 12 darstellt. Eine weitere Verprägung 15 auf dem Schaft 12 dient zur Abstützung einer Federanordnung 11. Ein innenliegender Endabschnitt des Einsatzteiles 10 ist mit einem sich konisch verjüngenden Innenwandungsbereich 16 versehen, dem Verprägungen 13 am inneren Stirnbereich des Schaftes 12 zugeordnet sind. Dadurch ergibt sich eine energieabsorbierende Deformationsanordnung, die koaxial zur Längsachse des Hohlprofiles 9 und damit in Zugrichtung der Halteelemente 7 wirksam ist. Der Aufbau und die Zuordnung dieser energieabsorbierenden Deformationsanordnung zu einem Schaft eines Halteelementes ist mit der energieaborbierenden Deformationsanordnung für ein seitliches Halteelement des Trennetzes gemäß der DE 43 36 380 C2 identisch, so daß bezüglich weiterer Details dieser energieabsorbierenden Deformationsanordnung auf dieses Patent verwiesen wird. Dadurch wird ein Kraftbegrenzer für die Halterung des Flächengebildes mit seinen Halteelementen 7 im Bereich der fahrzeugfesten Aufnahmen 8 geschaffen.

## Patentansprüche

1. Laderaumabdeckung für ein Kraftfahrzeug mit einer flexiblen, aus einer verstauten Ruheposition in einen horizontalen Abdeckzustand ausziehbaren Abdeckplane, die in einem in Auszugrichtung vorderen Endbereich mit zwei koaxial zueinander zu gegenüberliegenden Seiten abragenden Halteelementen versehen ist, die in ausgezogenem Funkti onszustand in fahrzeugfesten Aufnahmen positionierbar sind, wobei die Aufnahmen in der durch den horizontalen Abdeckzustand definierten Ebene angeordnet sind, **dadurch gekennzeichnet, dass** die Halteelemente (7) über ein längserstrecktes, über die gesamte Breite der Abdeckplane (5) durchgängiges Hohlprofil (9) miteinander verbunden sind, und dass die Halteelemente (7) und die fahrzeugfesten Aufnahmen (8) zueinander korrespondierende Sicherungsabschnitte aufweisen, die einen -in Längsrichtung des Hohlprofiles (9) gesehen- formschlüssig wirksamen Rückhalt der Abdeckplane (5) im ausgezogenen Funktionszustand bilden.

2. Laderaumabdeckung nach Anspruch 1, **dadurch gekennzeichnet, dass** die Halteelemente (7) mittels jeweils einer energieabsorbierenden Deformationsanordnung ((10) bis (16)) mit dem Hohlprofil (9) verbunden sind.

3. Laderaumabdeckung nach Anspruch 2, **dadurch gekennzeichnet, dass** die energieabsorbierenden Deformationsanordnungen ((10) bis (16)) in dem Hohlprofil (9) integriert sind.

4. Laderaumabdeckung nach Anspruch 1, **dadurch gekennzeichnet, dass** die Sicherungsabschnitte der Halteelemente (7) als pilzartige Köpfe gestaltet sind, die mittels jeweils eines Schaftes (12) mit der energieabsorbierenden Deformationsanordnung ((10) bis (16)) und mit dem Hohlprofil (9) verbunden sind.

5. Laderaumabdeckung nach Anspruch 4, **dadurch gekennzeichnet, dass** die Sicherungsabschnitte der fahrzeugfesten Aufnahmen (8) jeweils als Einlauframpe mit einem in Montagerichtung anschließenden, in Zugrichtung wirksamen Hinterschnitt, der auf den pilzartigen Kopf des Halteelementes (7) abgestimmt ist, gestaltet sind.

## Claims

1. Cargo space cover for a motor vehicle, comprising a flexible cover sheet that can be pulled out from a stowed resting position into a horizontal covering state and that is provided, in a forward end region in the pull-out direction, with two retaining elements that are coaxial with each other, project on opposite sides and can be positioned in the pulled-out functional state in receptacles fixed to the vehicle, the receptacles being arranged in the plane defined by the horizontal covering state, **characterised in that** the retaining elements (7) are connected to each other *via* a longitudinally extended hollow profile section (9) extending throughout the entire width of the cover sheet (5), and the retaining elements (7) and the receptacles (8) fixed to the vehicle have mutually corresponding securing portions that form a restraint for the cover sheet (5) in the pulled-out functional state, which restraint, viewed in the longitudinal direction of the hollow profile section (9), acts in a positive-locking manner.

2. Cargo space cover according to claim 1, **characterised in that** the retaining elements (7) are each connected to the hollow profile section (9) by an energy-absorbing deformation arrangement ((10) to (16)).

3. Cargo space cover according to claim 2, **characterised in that** the energy-absorbing deformation arrangements ((10) to (16)) are integrated in the hollow profile section (9).

4. Cargo space cover according to claim 1, **characterised in that** the securing portions of the retaining elements (7) are shaped in the form of mushroom-like heads which are each connected to the energy-absorbing deformation arrangement ((10) to (16)) and to the hollow profile section (9) by means of a shaft (12).

5. Cargo space cover according to claim 4, **characterised in that** the securing portions of the receptacles (8) fixed to the vehicle are each shaped in the form of a lead-in ramp with an undercut adjoining it in the mounting direction and acting in the direction of tension, which undercut is matched to the mushroom-like head of the retaining element (7).

## Revendications

1. Recouvrement d'espace de chargement pour un véhicule automobile, avec une bâche de recouvrement souple, qui peut être déployée, à partir d'un état de repos rangé, dans un état de recouvrement horizontal, et qui est munie, dans une région terminale avant dans la direction de déploiement, de deux éléments de fixation dépassant coaxialement entre eux vers des côtés opposés, éléments qui, dans l'état fonctionnel déployé, peuvent être positionnés dans des logements solidaires du véhicule, les logements étant disposés dans le plan défini par l'état de recouvrement horizontal, **caractérisé en ce que** les éléments de fixation (7) sont reliés entre eux par un profilé creux oblong (9), continu sur toute la largeur de la bâche de recouvrement (5), et **en ce que** les éléments de fixation (7) et les logements (8) solidaires du véhicule présentent des parties d'assujettissement mutuellement correspondantes, qui forment une retenue active en engagement positif - considéré dans la direction longitudinale du profilé creux (9) - de la bâche de recouvrement (5) dans l'état fonctionnel déployé.

2. Recouvrement d'espace de chargement selon la revendication 1, **caractérisé en ce que** les éléments de fixation (7) sont reliés au profilé creux (9) par l'intermédiaire d'un dispositif respectif de déformation absorbeur d'énergie ((10) à (16)).

3. Recouvrement d'espace de chargement selon la revendication 2, **caractérisé en ce que** les dispositifs de déformation absorbeurs d'énergie ((10) à (16)) sont intégrés dans le profilé creux (9).

4. Recouvrement d'espace de chargement selon la revendication 1, **caractérisé en ce que** les parties d'assujettissement des éléments de fixation (7) sont réalisées sous forme de têtes en champignons, qui sont chacune reliées par l'intermédiaire d'une tige (12) au dispositif de déformation absorbeur d'énergie ((10) à (16)) et au profilé creux (9).

5. Recouvrement d'espace de chargement selon la revendication 4, **caractérisé en ce que** les parties d'assujettissement des logements (8) solidaires du véhicule sont respectivement réalisées sous forme de rampe d'entrée avec une contre-dépouille se raccordant à la rampe dans la direction de montage et active dans la direction de traction, qui est adaptée à la tête en champignon de l'élément de fixation (7).
